# FASCICULE DE BREVET EUROPEEN

(11) **EP 3 800 311 B1**
(45) Date de publication et mention de la délivrance du brevet: **07.09.2022**
(21) Numéro de dépôt: 20198548.8
(22) Date de dépôt: 25.09.2020
(51) Int. Cl.: E05B 83/30, B60R 7/04

(54) **RANGEMENT DE VÉHICULE DOTÉ D'UN MÉCANISME D'OUVERTURE PEU ENCOMBRANT**
VERSTAUELEMENT EINES FAHRZEUGS, AUSGESTATTET MIT EINEM PLATZSPARENDEN ÖFFNUNGSMECHANISMUS
STORAGE FOR VEHICLE PROVIDED WITH A SPACE-SAVING OPENING MECHANISM

(30) Priorité: 04.10.2019 FR 1911020
(43) Date de publication de la demande: 07.04.2021
(73) Titulaire: Renault s.a.s, 92100 Boulogne Billancourt (FR)
(72) Inventeur: DAGOREAU, Alain, 91410 Dourdan (FR); DARGENT, Olivier, 91510 Lardy (FR); MARCEAU, Thierry, 92500 rueil malmaison (FR)
(74) Mandataire: Renault Group

(56) Documents cités:
- CN-B- 107 201 856
- FR-A1- 3 078 545
- KR-A- 20110 038 998
- US-A1- 2005 104 380

## Description

La présente invention concerne un rangement de véhicule doté d'un mécanisme d'ouverture peu encombrant.

De façon schématique, un rangement de véhicule comprend un réceptacle délimité par une paroi, et un volet de fermeture dudit réceptacle, apte à passer d'une position de fermeture pour laquelle il clôt ledit rangement, à une position d'ouverture pour laquelle il permet d'accéder à la totalité de ce rangement. Le volet de fermeture est solidarisé au réceptacle au moyen d'un mécanisme de maintien qui est solidarisé audit volet et qui peut être désactivé par l'intermédiaire d'un organe de commande pouvant par exemple être un bouton poussoir, placé sur ledit volet. De cette manière, si le volet de fermeture clôt le rangement, une action sur l'organe de commande libère le mécanisme de maintien, permettant au volet de fermeture de s'ouvrir. Le volet de fermeture peut se déplacer par rotation entre la position de fermeture et la position d'ouverture. Un tiroir peut également être solidarisé à ce volet de fermeture, ledit tiroir étant rangé dans le réceptacle lorsque le volet est dans la position de fermeture. La libération du mécanisme de maintien va permettre au tiroir et au volet de fermeture solidarisé audit tiroir, de coulisser vers l'extérieur du rangement. US 2005 104 380 A1 divulgue un type de rangement selon le préambule de la revendication 1.

Or, un problème régulièrement rencontré avec de tels rangements est que le mécanisme de maintien saille vers l'intérieur dudit rangement, lorsque le volet est en position de fermeture. Il en résulte que ledit mécanisme occupe un volume non négligeable à l'intérieur du rangement, réduisant significativement le volume disponible pour stocker des affaires dans celui-ci.

La demande KR 1144575 décrit un rangement dont le mécanisme de maintien est solidarisé à la paroi délimitant le réceptacle, et qui ne saille donc pas vers l'intérieur dudit rangement. Or, un inconvénient majeur de ce type de rangement est que le mécanisme de maintien est complexe, car il met en œuvre un engrènement entre une roue crantée et une tige crantée, nécessitant une mise au point minutieuse et longue, qui va générer du temps et des coûts supplémentaires.

Un rangement selon l'invention possède un mécanisme de maintien du volet de fermeture contre le la paroi délimitant le réceptacle, qui ne saille pas vers l'intérieur dur rangement tout en s'affranchissant des inconvénients de l'état de la technique.

L'invention a pour objet un rangement d'un véhicule comprenant un réceptacle délimité par une paroi, et un volet de fermeture dudit réceptacle qui est maintenu dans une position de fermeture contre la paroi délimitant le réceptacle au moyen d'un mécanisme de maintien, ledit volet étant apte à s'ouvrir au moyen d'une désactivation dudit mécanisme par l'intermédiaire d'un organe de commande, ledit organe de commande et ledit mécanisme de maintien étant solidarisés à une surface extérieure de la paroi délimitant le réceptacle.

Selon l'invention, le mécanisme de maintien comprend une plaque support solidarisée à ladite surface extérieure, une biellette de renvoi montée pivotante sur ladite plaque support, et un premier pêne en contact avec une première gâche du volet et monté coulissant sur ladite plaque support, l'organe de commande étant un bouton poussoir possédant une tige d'actionnement, une pression sur ledit organe de commande entrainant un déplacement de la tige d'actionnement qui va alors provoquer une mise en rotation de la biellette, le déplacement de ladite biellette générant un coulissement du premier pêne qui va s'éloigner de la première gâche et ne plus être en contact avec celle-ci. La particularité du mécanisme de maintien du volet de fermeture contre la paroi délimitant le réceptacle du rangement, est de provoquer une translation du premier pêne au moyen d'une translation de l'organe de commande via une mise en rotation d'une biellette de renvoi qui est insérée entre ledit premier pêne et ledit organe de commande. Cette biellette de renvoi est à la fois au contact de la tige d'actionnement de l'organe de commande, et du premier pêne. La tige d'actionnement est fixée à l'organe de commande et est préférentiellement rectiligne. L'organe de commande est avantageusement un bouton poussoir accessible depuis une face de la paroi délimitant le réceptacle. La paroi du réceptacle délimite un volume de rangement et possède une ouverture qui est clôt par le volet de fermeture. Par défaut, le premier pêne est en contact avec la première gâche afin d'interagir avec celle-ci et maintenir le volet de fermeture dans une position fermée sur le rangement. Une pression exercée sur le bouton poussoir va déplacer le premier pêne afin qu'il ne soit plus au contact de la première gâche et qu'il n'interagisse plus avec elle, et va donc libérer le volet de fermeture dans le but de pouvoir l'ouvrir. Avantageusement, le volet de fermeture est monté rotatif et passe d'une position de fermeture à une position d'ouverture par rotation. Selon une variante de réalisation, le volet de fermeture est fixé à un tiroir, de sorte que ledit tiroir se retrouve intégralement rangé dans le réceptacle du rangement lorsque le volet est dans la position de fermeture et une pression exercée sur le bouton poussoir va désolidariser le volet de fermeture de la paroi délimitant le réceptacle du rangement, afin de pouvoir translater le tiroir et ledit volet vers l'extérieur dudit réceptacle.

Selon l'invention, le mécanisme comprend un deuxième pêne en contact avec une deuxième gâche du volet et monté coulissant sur la plaque support, une pression sur le bouton poussoir engendrant un coulissement dudit deuxième pêne sur la plaque support par l'intermédiaire d'une mise en rotation de la biellette sous l'effet du déplacement de la tige d'actionnement, ledit deuxième pêne s'éloignant de ladite deuxième gâche pour ne plus être en contact avec elle. La rotation de la biellette va ainsi engendrer le déplacement du premier pêne et du deuxième pêne afin de pouvoir ouvrir le volet de fermeture. Le déplacement du premier pêne et le déplacement du deuxième pêne peuvent être, soit simultanés, soit l'un après l'autre. La présence de deux pênes se justifie pour renforcer le maintien du volet de fermeture contre le réceptacle du rangement. Il est supposé que le volet présente un axe longitudinal et que les deux gâches sont situées aux deux extrémités dudit axe. Le maintien du volet contre le réceptacle est alors homogène.

Selon une caractéristique possible de l'invention, la mise en rotation de la biellette sous l'effet du déplacement de la tige d'actionnement engendre un coulissement simultané du premier pêne et du deuxième pêne. De cette manière, la libération du volet de fermeture pour pouvoir être ouvert est rapide, car il ne nécessite pas d'attendre d'abord le déplacement du premier pêne puis le déplacement du deuxième pêne ou inversement. De plus, une telle configuration est simplifiée et plus sûre, car les déplacements des deux pênes s'effectuent par le biais d'une seule et même biellette de renvoi. En effet, si les déplacements des deux pênes nécessitaient la mise en place de deux biellettes, chacune étant dédiée à un pêne, les risques de dysfonctionnement lors de la désactivation du mécanisme de maintien seraient accrus.

Selon une caractéristique possible de l'invention, la mise en rotation de la biellette est réalisée au moyen d'un contact direct entre la tige d'actionnement et ladite biellette. De cette manière, un contact direct entre la tige d'actionnement et la biellette permet une bonne maitrise de la mise en rotation de la biellette, que ne permettrait pas l'insertion d'une pièce intermédiaire.

Selon l'invention, le coulissement du premier pêne et le coulissement du deuxième pêne s'effectuent au moyen d'un contact direct entre lesdits deux pênes et ladite biellette. En simplifiant le nombre de pièces impliquées, la désactivation du mécanisme de maintien est plus précise et mieux maitrisée.

Selon l'invention, la biellette présente un corps central circulaire duquel émerge radialement une patte d'actionnement destinée à venir au contact de la tige d'actionnement, une première patte destinée à venir au contact du premier pêne et une deuxième patte destinée à venir au contact du deuxième pêne. De cette manière, la biellette comprend trois extensions radiales, l'une étant destinée à interagir avec la tige d'actionnement et les deux autres étant destinées à interagir avec les deux pênes. Autrement dit, la tige d'actionnement va provoquer la mise en rotation de la biellette, ladite mise en rotation provoquent le déplacement de deux pênes.

Selon une caractéristique possible de l'invention, le premier pêne comprend un crochet inséré dans la première gâche et le deuxième pêne comprend un crochet inséré dans la deuxième gâche, une mise en rotation de la biellette sous l'effet de la tige d'actionnement entrainant un déplacement des deux pênes et donc une séparation desdits crochets avec leurs gâches respectives. Il s'agit d'un mode de réalisation particulier et non limitatif d'une interaction entre les pênes et les gâches, ce mode de réalisation étant particulièrement adapté à un rangement selon l'invention.

Selon une caractéristique possible de l'invention, le bouton poussoir est représentée par une paroi d'actionnement légèrement incurvée, la tige d'actionnement prenant naissance sur ladite paroi et s'étendant perpendiculairement par rapport à celle-ci. De cette manière, le déplacement en translation de la tige d'actionnement s'effectue dans le même sens que celui de l'enfoncement du bouton-poussoir, permettant une bonne maitrise du déplacement de ladite tige d'actionnement.

Selon une caractéristique possible de l'invention, la plaque support comprend des éléments de guidage permettant de guider le déplacement du premier pêne et du deuxième pêne. Ces éléments de guidage peuvent par exemple être représentés par des plots émergeant de la plaque support ou sous la forme de pattes repliées enserrant chaque pêne.

Selon une caractéristique possible de l'invention, la plaque support comprend des lames ressort permettant de maintenir le premier pêne et le deuxième pêne contre ladite plaque support. Ces lames ressort sont des éléments solidarisés à la plaque support. Elles peuvent constituer, soit des pièces rapportées par rapport à la plaque support, soit faire partie intégrante de ladite plaque en étant réalisées dans le même matériau que celui de ladite plaque support. Ces lames ressort sont initialement déformées élastiquement afin de placer chaque pêne contre la plaque support, puis sont ensuite relâchées. En tentant de retrouver leur configuration initiale, chaque lame élastique va avoir tendance à plaquer chaque pêne contre la plaque support. Préférentiellement chaque lame ressort est rectiligne.

Un rangement selon l'invention présente l'avantage de posséder un mécanisme de maintien du volet de fermeture contre la paroi délimitant le réceptacle, qui est simple et rapide à mettre en œuvre, grâce notamment à la présence d'une seule biellette pour générer le déplacement des deux pênes. Il en résulte que ce mécanisme de maintien est fiable, car il diminue les risques de dysfonctionnement par rapport à une configuration impliquant deux biellettes de renvoi, chacune étant dédiée à un pêne. De plus, en réduisant le nombre de pièces impliquées, le mécanisme de maintien d'un rangement selon l'invention est peu encombrant et génère des coûts limités.

On donne ci-après une description détaillée d'un mode de réalisation préféré d'un rangement selon l'invention, en se référant aux figures suivantes :
[Fig. 1] représente une vue en perspective d'un rangement selon l'invention,
[Fig. 2] représente une vue en perspective d'une plaque support d'un rangement selon l'invention,
[Fig. 3] représente une vue en perspective sous un autre angle d'un rangement selon l'invention,
[Fig. 4] représente une vue de face d'une plaque support et d'un dispositif de maintien d'un rangement selon l'invention, le bouton poussoir n'étant pas actionné,
[Fig. 5] représente une vue de face du support et du dispositif de maintien de la figure 4, le bouton poussoir ayant été actionné,
[Fig. 6] représente une vue de face du mécanisme de maintien d'un rangement selon l'invention, le bouton poussoir n'étant pas actionné,
[Fig. 7] représente une vue de face du mécanisme de maintien d'un rangement selon l'invention, le bouton poussoir ayant été actionné,
[Fig. 8] représente une de face de l'autre côté du mécanisme de maintien d'un rangement selon l'invention, le bouton poussoir n'étant pas actionné,
[Fig. 9] représente une de face de l'autre côté du mécanisme de maintien d'un rangement selon l'invention, le bouton poussoir ayant été actionné,
[Fig. 10] représente une vue de face agrandie d'une zone de la plaque support et du mécanisme de maintien d'un rangement selon l'invention,
[Fig. 11] représente une vue de face d'une plaque support et du mécanisme de maintien d'un rangement selon l'invention.

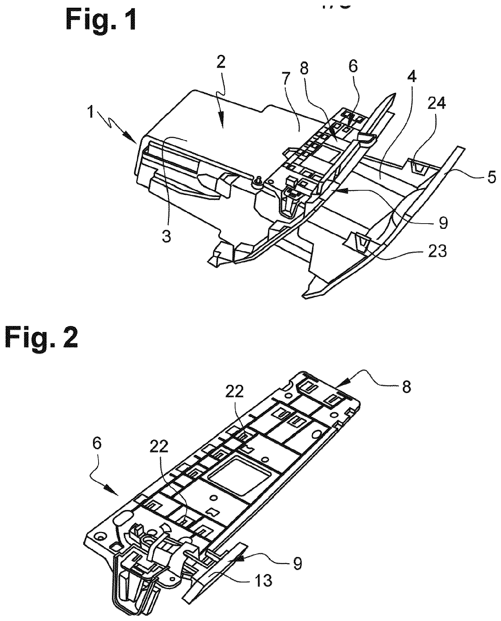

En se référant aux figures 1 et 2, un rangement 1 selon l'invention comprend un réceptacle 2 délimité par une paroi 3, et un tiroir 4 monté coulissant dans ledit réceptacle 2 et se terminant par un volet de fermeture 5. Ce volet de fermeture 5 est fixé au tiroir 4 et ledit tiroir 4 est apte à passer d'une position rentrée pour laquelle il est complètement inclus dans le réceptacle 2 à une position d'ouverture variable pour laquelle il a coulissé hors dudit réceptacle avec une amplitude plus ou moins importante.

Lorsque le tiroir 4 est dans la position rentrée, le volet de fermeture 5 clôt l'espace interne délimité par la paroi 3 délimitant le réceptacle 2 et dans lequel est rangé ledit tiroir 4. Le volet de fermeture 5 est maintenu dans cette position au moyen d'un mécanisme de maintien 6 arrimé à une surface externe 7 de la paroi 3 délimitant le réceptacle 2. Ce mécanisme de maintien 6 permet d'empêcher le tiroir 4 auquel est solidarisé le volet de fermeture 5 de coulisser inopinément hors du réceptacle 2, sans qu'un individu n'ait entrepris la moindre démarche pour l'ouvrir. En étant arrimé à une surface externe 7 de la paroi 3 délimitant le réceptacle 2 du rangement, le mécanisme de maintien 6 ne saille pas dans l'espace interne délimité par le réceptacle 2, et n'empiète donc pas sur le volume disponible dans ledit réceptacle 2 et qui est réservé au stockage d'objets.

En se référant aux figures 2, 4, 5, 10 et 11, le dispositif de maintien comprend une plaque support 8 plane, un bouton-poussoir 9, une biellette 10 de renvoi, un premier pêne 11 et un deuxième pêne 12.

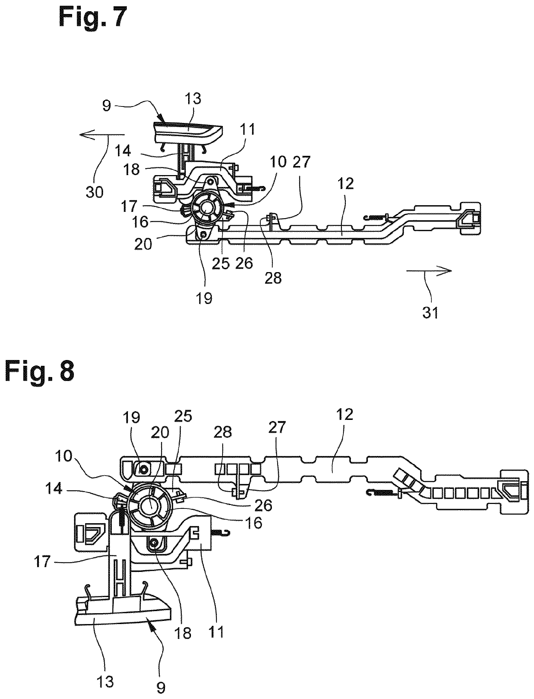

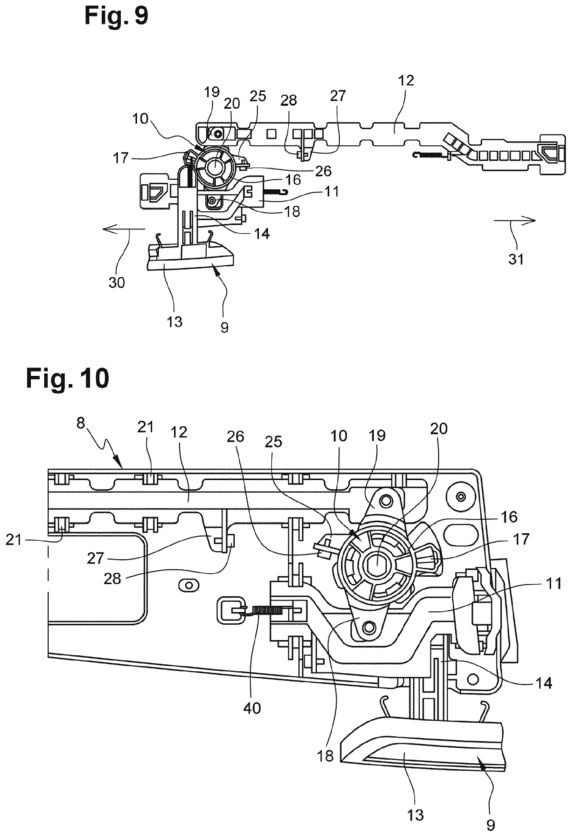

En se référant aux figures 8 et 9, le bouton poussoir 9 comprend une paroi d'actionnement 13 de forme rectangulaire, pouvant être plane ou légèrement incurvée, et une tige d'actionnement 14 plane prenant naissance sur ladite paroi d'actionnement 13 saillant perpendiculairement de celle-ci. Cette tige d'actionnement 14 comporte une extrémité libre 15 de forme arrondie.

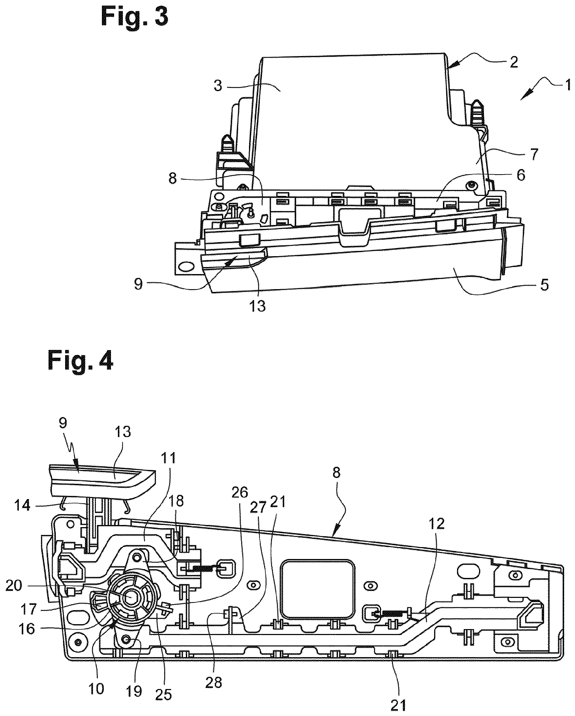

En se référant aux figures 4 à 10, la biellette 10 comprend un corps central 16 de forme circulaire duquel émergent radialement une patte d'actionnement 17, une première patte 18 et une deuxième patte 19. La première patte 18 et la deuxième patte 19 sont disposées autour du corps central 16 en étant sensiblement diamétralement opposées. Plus précisément, ces deux pattes 18, 19 sont alignées le long d'un même diamètre du corps central 16 à plus ou moins 15°. La biellette 10 comprenant le corps central 16 et les trois pattes 17, 18, 19 est sensiblement plane, et est montée en rotation sur la plaque support 8 autour d'un axe 20 qui est perpendiculaire au plan de ladite plaque support 8. La plaque support 8 est allongée, et la biellette 10 est montée à l'une des deux extrémités de ladite plaque 8, considérées le long d'un axe longitudinal de celle-ci.

En se référant aux figures 4 à 10, le premier pêne 11 est de faible longueur et est placé sur la plaque support 8 du côté de la biellette 10. La longueur du premier pêne est inférieure à la moitié de la longueur totale de la plaque support 8. Le premier pêne 11 est monté coulissant sur la plaque support 8, de sorte qu'il puisse se déplacer en translation le long d'un axe longitudinal de celle-ci.

En se référant aux figures 4 à 10, le deuxième pêne 12 possède une grande longueur, qui est préférentiellement supérieure à 70% de la longueur totale de la plaque support 8. Le deuxième pêne 12 est monté coulissant sur la plaque support 8, de sorte qu'il puisse se déplacer en translation le long d'un axe longitudinal de celle-ci.

En se référant aux figures 4, 5 et 10, le deuxième 12 pêne est inséré sur la plaque support 8 par l'intermédiaire d'éléments de guidage 21 pouvant revêtir la forme de plots ou de pattes repliées. Ces éléments de guidage 21 sont agencés le long de la plaque support 8, et sont destinés à enserrer de part et d'autre ledit deuxième pêne 12.

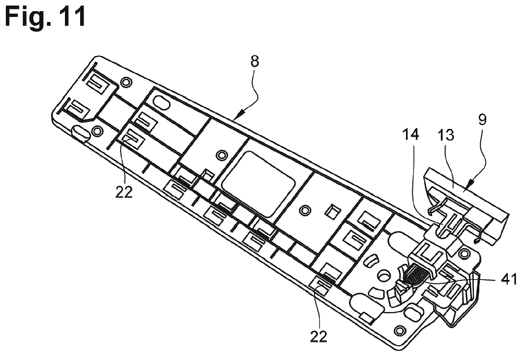

En se référant aux figures 2 et 11, le deuxième pêne 12 est plaqué contre la plaque support 8 au moyen d'une pluralité de lames ressort 22 faisant partie intégrante de ladite plaque support 8, autrement dit fabriquées dans le même matériau que celui de ladite plaque 8. De cette manière, la plaque support 8 et les lames ressort 22 constituent une même pièce.

Le bouton-poussoir 9 est placé au-dessus de l'ouverture de la paroi 3 délimitant le réceptacle 2, de manière que la paroi d'actionnement 13 se retrouve parallèle à ladite ouverture.

En se référant aux figures 4 à 10, la biellette 10, le bouton poussoir 9, le premier pêne 11 et le deuxième pêne 12 sont positionnés sur la plaque support 8 les uns par rapport aux autres, de sorte que :
- L'extrémité libre 15 de la tige d'actionnement 14 soit au contact de la patte d'actionnement 17 de la biellette 10,
- La première patte 18 de la biellette 10 soit au contact du premier pêne 11,
- La deuxième patte 19 de la biellette 10 soit au contact du deuxième pêne 12.

En se référant à la figure 1, le volet de fermeture 5 est doté d'une première gâche 23 et d'une deuxième gâche 24 qui sont assimilables à des anneaux. Ainsi, lorsque le volet de fermeture 5 clôt le rangement 1 et que le tiroir 4 est complètement inclus dans le réceptacle 2, le premier pêne 11 comprend un crochet qui passe dans la première gâche 23 et le deuxième pêne 12 comprend un crochet qui passe dans la deuxième gâche 24. De cette manière, sans une action sur le bouton-poussoir 9, le tiroir 4 reste bloqué dans le réceptacle 2 du rangement 1, sans possibilité d'être translaté vers l'extérieur dudit réceptacle 2.

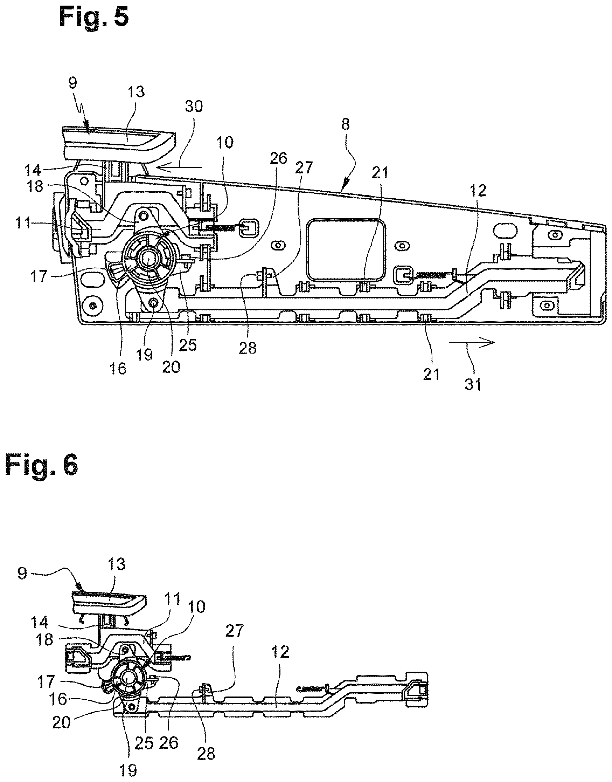

En se référant aux figures 5, 7 et 9, une personne désireuse d'accéder au tiroir 4 va exercer une pression sur la paroi d'actionnement 13 du bouton-poussoir 9, ladite pression engendrant simultanément un déplacement de ladite paroi d'actionnement 13 et de la tige d'actionnement 14 qui est solidarisée à cette paroi 13. La tige d'actionnement 14 exerce alors une poussée sur la patte d'actionnement 14 de la biellette 100, qui amorce une rotation autour de son axe de rotation 20. La première patte 18 et la deuxième patte 19 de la biellette 10 exercent à leur tour une poussée, respectivement sur le premier pêne 11 et sur le deuxième pêne 12. Le premier pêne 11 se déplace alors le long d'un axe longitudinal de la plaque support 8 dans un sens qui a tendance à le faire sortir de ladite plaque 8 comme indiqué par la flèche 30, et le deuxième pêne 12 se déplace alors le long d'un axe longitudinal de la plaque support 8 dans un sens, qui est opposé au sens de déplacement du premier pêne 11 et qui a tendance à le faire sortir de ladite plaque 8 comme indiqué par la flèche 31. Autrement dit, une mise en rotation de biellette 10 autour de son axe de rotation 20 entraine un déplacement simultané du premier pêne 11 et du deuxième pêne 12 dans un sens qui les éloigne l'un de l'autre. Le crochet du premier pêne 11 et le crochet du deuxième pêne 12 s'écartent alors respectivement de la première gâche 23 et de la deuxième gâche 24 du volet de fermeture 5, libérant alors en mouvement l'ensemble constitué par le tiroir 4 et ledit volet 5. En effet, le volet de fermeture 5 n'étant plus bloqué dans la paroi 3 délimitant le réceptacle 2, cet ensemble peut librement coulisser hors du réceptacle 2 du rangement 1.

En se référant à la figure 10, la biellette 10 comprend une troisième patte 25 s'étendant radialement de son corps central 16, ladite troisième patte 25 portant une butée 26 antibruit. Le deuxième pêne 12 comprend une extension latérale 27 s'étendant perpendiculairement à un axe longitudinal dudit deuxième pêne 12 et destinée également à porter une autre butée antibruit 28.

En se référant aux figures 10 et 11, le premier pêne 11 est relié à la plaque support 8 au moyen d'un ressort de rappel 40. Un ressort de rappel 41 est également inséré entre la tige d'actionnement 14 et la plaque ressort 8, lesdits deux ressorts de rappel étant destinés à faire revenir le bouton-poussoir 9 à sa position initiale après avoir subi une pression. En effet, lorsqu'un individu appuie sur le bouton-poussoir 9 pour libérer en mouvement le tiroir 4 et le volet de fermeture 5, il relâche la pression sur ledit bouton-poussoir 9 qui revient alors à sa position initiale.

Bien que dans la description détaillée précédente, le volet de fermeture 5 soit fixé à un tiroir 4, le mécanisme de maintien 6 qui a été préalablement décrit peut également s'appliquer à un volet de fermeture 5 simple, clôturant directement la paroi 3 délimitant le réceptacle 2 du rangement. En effet, le volet de fermeture 5, pourrait être monté en rotation entre une position de fermeture pour laquelle il clôt le réceptacle 2 du rangement 1, et une position d'ouverture pour laquelle il permet d'accéder à la totalité dudit réceptacle 2, une pression exercée sur le bouton-poussoir 9 libérant alors en rotation ledit volet de fermeture 5.

## Revendications

1. Rangement (1) d'un véhicule comprenant un réceptacle (2) délimité par une paroi (3), et un volet de fermeture (5) dudit réceptacle (2) qui est maintenu dans une position de fermeture contre la paroi (3) délimitant le réceptacle (2) au moyen d'un mécanisme de maintien (6), ledit volet (5) étant apte à s'ouvrir au moyen d'une désactivation dudit mécanisme (6) par l'intermédiaire d'un organe de commande (9), ledit organe de commande (9) et ledit mécanisme de maintien (6) étant solidarisés à une surface extérieure (7) de la paroi (3) délimitant le réceptacle (2), **caractérisé en ce que** le mécanisme de maintien (6) comprend une plaque support (8) solidarisée à ladite surface extérieure (7), une biellette (10) de renvoi montée pivotante sur ladite plaque support (8), et un premier pêne (11) en contact avec une première gâche (23) du volet (5) et monté coulissant sur ladite plaque support (8), et **en ce que** l'organe de commande est un bouton poussoir (9) possédant une tige d'actionnement (14), une pression sur ledit organe de commande (9) entrainant un déplacement de la tige d'actionnement (14) qui va alors provoquer une mise en rotation de la biellette (10), le déplacement de ladite biellette (10) générant un coulissement du premier pêne (11) qui va s'éloigner de la première gâche (23) et ne plus être en contact avec celle-ci, le mécanisme (6) comprenant un deuxième pêne (12) en contact avec une deuxième gâche (24) du volet (5) et monté coulissant sur la plaque support (8), une pression sur le bouton poussoir (9) engendrant un coulissement dudit deuxième pêne (12) sur la plaque support (8) par l'intermédiaire d'une mise en rotation de la biellette (10) sous l'effet du déplacement de la tige d'actionnement (14), ledit deuxième pêne s'éloignant de ladite deuxième gâche (24) pour ne plus être en contact avec elle, le coulissement du premier pêne (11) et le coulissement du deuxième pêne (12) s'effectuant au moyen d'un contact direct entre lesdits deux pênes (11, 12) et ladite biellette (10), la biellette (10) présentant un corps (16) central circulaire duquel émerge radialement une patte d'actionnement (17) destinée à venir au contact de la tige d'actionnement (14), une première patte (18) destinée à venir au contact du premier pêne (11) et une deuxième patte (19) destinée à venir au contact du deuxième pêne (12).

2. Rangement selon la revendication 1, **caractérisé en ce que** la mise en rotation de la biellette (10) sous l'effet du déplacement de la tige d'actionnement (14) engendre un coulissement simultané du premier pêne (11) et du deuxième pêne (12).

3. Rangement selon l'une quelconque des revendications 1 ou 2, **caractérisé en ce que** la mise en rotation de la biellette (10) est réalisée au moyen d'un contact direct entre la tige d'actionnement (14) et ladite biellette (10).

4. Rangement selon l'une quelconque des revendications 1 à 3, **caractérisée en ce que** le premier pêne (11) comprend un crochet inséré dans la première gâche (23) et le deuxième pêne (12) comprend un crochet inséré dans la deuxième gâche (24), et **en ce qu'**une mise en rotation de la biellette (10) sous l'effet de la tige d'actionnement (14) entraine un déplacement des deux pênes (11, 12) et donc une séparation desdits crochets avec leurs gâches respectives (23, 24).

5. Rangement selon l'une quelconque des revendications 1 à 4, **caractérisé en ce que** le bouton poussoir (9) est représentée par une paroi d'actionnement (13) légèrement incurvée, et **en ce que** la tige d'actionnement (14) prend naissance sur ladite paroi (13) et s'étend perpendiculairement par rapport à celle-ci.

6. Rangement selon l'une quelconque des revendications 1 à 5, **caractérisé en ce que** la plaque support (8) comprend des éléments de guidage (21) permettant de guider le déplacement du premier pêne (11) et du deuxième pêne (12).

7. Rangement selon l'une quelconque des revendications 1 à 6, **caractérisé en ce que** la plaque support (8) comprend des lames ressort (22) permettant de maintenir le premier pêne (11) et le deuxième pêne (12) contre ladite plaque support (8).

## Patentansprüche

1. Unterbringung (1) eines Fahrzeugs, umfassend einen Behälter (2), der durch eine Wand (3) begrenzt ist, und eine Klappe (5) zum Verschließen des Behälters (2), die mittels eines Haltemechanismus (6) in einer Verschlussposition gegen die den Behälter (2) begrenzende Wand (3) gehalten wird, wobei die Klappe (5) dazu in der Lage ist, sich mittels einer Deaktivierung des Mechanismus (6) über ein Steuerorgan (9) zu öffnen, wobei das Steuerorgan (9) und der Haltemechanismus (6) fest mit einer Außenfläche (7) der den Behälter (2) begrenzenden Wand (3) verbunden sind, **dadurch gekennzeichnet, dass** der Haltemechanismus (6) eine Trägerplatte (8), die fest mit der Außenfläche (7) verbunden ist, einen Umlenkarm (10), der drehbar an der Trägerplatte (8) montiert ist, und einen ersten Riegel (11), der mit einem ersten Schließblech (23) der Klappe (5) in Kontakt steht und gleitend an der Trägerplatte (8) montiert ist, umfasst und dass das Steuerorgan ein Druckknopf (9) ist, der eine Betätigungsstange (14) besitzt, wobei ein Druck auf das Steuerorgan (9) eine Bewegung der Betätigungsstange (14) hervorruft, die daraufhin eine Drehung des Arms (10) bewirkt, wobei die Bewegung des Arms (10) ein Gleiten des ersten Riegels (11) erzeugt, der sich von dem erste Schließblech (23) entfernen und mit diesen nicht mehr in Kontakt stehen wird, wobei der Mechanismus (6) einen zweiten Riegel (12) umfasst, der mit einem zweiten Schließblech (24) der Klappe (5) in Kontakt steht und gleitend an der Trägerplatte (8) montiert ist, wobei ein Druck auf den Druckknopf (9) ein Gleiten des zweiten Riegels (12) auf der Trägerplatte (8) über eine Drehung des Arms (10) unter der Wirkung der Verschiebung der Betätigungsstange (14) bewirkt, wobei sich der zweite Riegel vom zweiten Schließblech (24) entfernt, um nicht mehr mit diesem in Kontakt zu stehen, wobei das Gleiten des ersten Riegels (11) und das Gleiten des zweiten Riegels (12) mittels eines direkten Kontakts zwischen den beiden Riegeln (11, 12) und dem Arm (10) erfolgt, wobei der Arm (10) einen kreisförmigen zentralen Körper (16) aufweist, von dem eine Betätigungslasche (17), die dazu bestimmt ist, mit der Betätigungsstange (14) in Kontakt zu kommen, eine erste Lasche (18), die dazu bestimmt ist, mit dem ersten Riegel (11) in Kontakt zu kommen, und eine zweite Lasche (19), die dazu bestimmt ist, mit dem zweiten Riegel (12) in Kontakt zu kommen, radial hervorstehen.

2. Unterbringung nach Anspruch 1, **dadurch gekennzeichnet, dass** das Drehen des Arms (10) unter der Wirkung der Bewegung der Betätigungsstange (14) ein gleichzeitiges Gleiten des ersten Riegels (11) und des zweiten Riegels (12) bewirkt.

3. Unterbringung nach einem der Ansprüche 1 oder 2, **dadurch gekennzeichnet, dass** die Drehung des Arms (10) mittels eines direkten Kontakts zwischen der Betätigungsstange (14) und dem Arm (10) erfolgt.

4. Unterbringung nach einem der Ansprüche 1 bis 3, **dadurch gekennzeichnet, dass** der erste Riegel (11) einen Haken umfasst, der in das erste Schließblech (23) eingesetzt ist, und dass der zweite Riegel (12) einen Haken umfasst, der in das zweite Schließblech (24) eingesetzt ist, und dass eine Drehung des Arms (10) unter der Wirkung der Betätigungsstange (14) eine Bewegung der beiden Riegel (11, 12) und damit eine Trennung der Haken von ihren jeweiligen Schließblechen (23, 24) bewirkt.

5. Unterbringung nach einem der Ansprüche 1 bis 4, **dadurch gekennzeichnet, dass** der Druckknopf (9) durch eine leicht gekrümmte Betätigungswand (13) dargestellt ist und dass die Betätigungsstange (14) an der Wand (13) entspringt und sich senkrecht zu dieser erstreckt.

6. Unterbringung nach einem der Ansprüche 1 bis 5, **dadurch gekennzeichnet, dass** die Trägerplatte (8) Führungselemente (21) umfasst, die eine Führung der Bewegung des ersten Riegels (11) und des zweiten Riegels (12) ermöglichen.

7. Unterbringung nach einem der Ansprüche 1 bis 6, **dadurch gekennzeichnet, dass** die Trägerplatte (8) Federblätter (22) umfasst, die es ermöglichen, den ersten Riegel (11) und den zweiten Riegel (12) gegen die Trägerplatte (8) zu halten.

## Claims

1. Storage (1) for a vehicle comprising a receptacle (2) delimited by a wall (3), and a closing flap (5) for said receptacle (2) which is held in a closed position against the wall (3) delimiting the receptacle (2) by means of a holding mechanism (6), said flap (5) being able to open when said mechanism (6) is deactivated by means of a control member (9), said control member (9) and said folding mechanism (6) being secured to an outer surface (7) of the wall (3) delimiting the receptacle (2), **characterized in that** the holding mechanism (6) comprises a support plate (8) secured to said outer surface (7), a bellcrank (10) pivotably mounted on said support plate (8), and a first bolt (11) in contact with a first latch (23) of the flap (5) slidably mounted on said support plate (8), and **in that** the control member is a pushbutton (9) having an actuation stem (14), where pressure of said control member (9) causes the actuation stem (14) to move, which will then rotate the bellcrank (10), the movement of the bellcrank (10) causing the first bolt (11) to slide, moving it away from the first latch (23) so as to be no longer in contact there with, the mechanism (6) comprising a second bolt (12) in contact with a second latch (24) of the flap (5) and slidably mounted on the support plate (8), where pressure on the pushbutton (9) causes said second bolt (12) to slide on the support plate (8) owing to the bellcrank (10) being rotated by the movement of the actuation stem (14), said second bolt moving away from said second batch (24) so as to be no longer in contact therewith, the sliding of the first bolt (11) and sliding of the second bolt (12) being brought about by means of direct contact between said two bolts (11, 12) and said bellcrank (10), the bellcrank (10) having a circular central body (16) from which there emerges radially an actuation tab (17) that is intended to come into contact with the actuation stem (14), a first tab (18) intended contact with the first bolt (11) and a second tab (19) intended it contact with the second bolt (12).

2. Storage according to Claim 1, **characterized in that** the rotation of the bellcrank (10) due to the movement of the actuation stem (14) causes simultaneous sliding of the first bolt (11) and of the second bolt (12) .

3. Storage according to either one of Claims 1 and 2, **characterized in that** the rotation of the bellcrank (10) is brought about by means of direct contact between the actuation stem (14) and said bellcrank (10) .

4. Storage according to any one of Claims 1 to 3, **characterized in that** the first bolt (11) comprises a hook inserted into the first latch (23) and the second bolt (12) comprises a hook inserted into the second latch (24), and **in that** rotation of the bellcrank (10) brought about by the actuation stem (14) causes the two bolts (11, 12) to move, and thus separation of said hooks with their respective latches (23, 24).

5. Storage according to any one of Claims 1 to 4, **characterized in that** the pushbutton (9) is represented by a slightly curved actuation wall (13), and **in that** the actuation stem (14) begins on said wall (13) and extends perpendicular thereto.

6. Storage according to any one of Claims 1 to 5, **characterized in that** the support plate (8) comprises guiding elements (21) that serve to guide the movement of the first bolt (11) and of the second bolt (12).

7. Storage according to any one of Claims 1 to 6, **characterized in that** the support plate (8) comprises spring blades (22) that serve to hold the first bolt (11) and the second bolt (12) against said support plate (8).
